Europäisches Patentamt

European Patent Office

Office européen des brevets

(19)

(11) Numéro de publication: **0 229 603**
**B1**

(12) # FASCICULE DE BREVET EUROPEEN

(45) Date de publication du fascicule du brevet:
04.04.90

(51) Int. Cl.⁴: **G01B 11/30**

(21) Numéro de dépôt: **86870181.4**

(22) Date de dépôt: **03.12.86**

(54) Procédé de mesure en continu de la rugosité de la surface d'un produit laminé à froid.

(30) Priorité: **05.12.85 LU 86194**

(43) Date de publication de la demande:
**22.07.87 Bulletin 87/30**

(45) Mention de la délivrance du brevet:
**04.04.90 Bulletin 90/14**

(84) Etats contractants désignés:
**DE ES FR GB IT NL SE**

(56) Documents cités:
**EP-A- 0 101 375**
**EP-A- 0 131 710**
**BE-A- 893 365**
**GB-A- 2 073 878**
**LU-A- 56 223**
**US-A- 4 548 506**

(73) Titulaire: **CENTRE DE RECHERCHES METALLURGIQUES CENTRUM VOOR RESEARCH IN DE METALLURGIE Association sans but lucratif, Vereniging zonder winstoogmerk Rue Montoyer, 47, B-1040 Bruxelles(BE)**

(72) Inventeur: **Monfort, Guy Antoine, 117, rue Neuvice, B-4320 Montegnee(BE)**
Inventeur: **Bragard, Adolphe André, 76, Chemin des Crêtes, B-4050 Esneux(BE)**

(74) Mandataire: **Lacasse, Lucien Emile et al, CENTRE DE RECHERCHES METALLURGIQUES Abbaye du Val-Benoît 11, rue Ernest Solvay, B-4000 Liège(BE)**

## Description

La présente invention concerne un procédé de mesure en continu de la rugosité d'un produit laminé à froid, en particulier d'une bande laminée à froid.

On sait que la rugosité d'une bande laminée à froid influence fortement sa mise en œuvre par emboutissage et son aspect après peinture.

Il convient donc que la bande laminée à froid présente une rugosité aussi constante que possible sur toute sa surface; il est d'ailleurs souhaitable que les bandes destinées à une même application présentent toutes une rugosité comparable.

Il est dès lors important de surveiller l'évolution de la rugosité des bandes produites dans un laminoir à froid, afin de déceler aussi tôt que possible tout écart par rapport aux valeurs autorisées.

Actuellement, cette surveillance s'exerce par le prélèvement périodique d'un échantillon de bande et son examen au laboratoire. Cette méthode présente l'inconvénient d'être discontinue et d'exiger l'arrêt du laminage pour prélever l'échantillon par découpage de la bande. De plus, cet examen ne permet pas de déterminer l'état de la totalité de la bande.

Enfin, l'échantillon étant prélevé hors régime, puisque la bande doit être arrêtée, n'est pas toujours représentatif de la rugosité obtenue en régime.

Parmi les méthodes de détermination en continu de la rugosité de la surface d'un produit laminé tel qu'une bande laminée à froid, la seule actuellement utilisée est la méthode optique. Dans cette méthode, on envoie sur la surface un faisceau de lumière visible, sous une incidence déterminée par rapport à la normale à la surface au point d'incidence, on capte le faisceau réfléchi par la surface, on mesure l'énergie lumineuse réfléchie et on en déduit une mesure de la rugosité de la surface.

Cette méthode présente cependant un inconvénient important lorsque la rugosité de la surface atteint des valeurs sensiblement égales ou supérieures à la longueur d'onde du faisceau lumineux utilisé. La méthode fournit dans ce cas des indications relatives aux pentes du profil, c'est-à-dire des pics et des vallées constituant ce profil, mais elle ne permet pas de mesurer avec précision la hauteur réelle de ces pics et de ces vallées.

Dans le cas des bandes laminées à froid pour emboutissage, on utilise, suivant l'invention, un faisceau lumineux dont la longueur d'onde est au moins égale à 5 micromètres.

Selon une mise en œuvre particulière, on utilise un faisceau émis par un laser, de préférence un laser au $CO_2$.

Egalement selon l'invention, on utilise un faible puissance, de préférence inférieure à 25 W, afin de ne pas endommager la surface.

Le faisceau laser incident est avantageusement incliné d'environ 50° par rapport à la normale à la surface.

Selon une mise en œuvre intéressante du procédé de l'invention, on mesure en continu la rugosité d'une bande en mouvement, au moyen d'un émetteur et d'un récepteur de faisceau lumineux disposés sur la trajectoire de cette bande.

A cet égard, il s'est avéré particulièrement avantageux de mesurer en continu la rugosité d'une bande dès sa sortie du laminoir de skin-pass, au moyen d'un ensemble de mesure constitué d'un laser au $CO_2$ d'une puissance de 4 W et d'une cellule pyroélectrique captant le faiseau laser spéculairement réfléchi par la surface de la bande. L'ensemble de mesure était disposé immédiatement à la sortie du laminoir, de telle façon que les faisceaux incident et réfléchi définissent un plan vertical perpendiculaire à la direction de déplacement de la bande. L'angle d'incidence était de l'ordre de 50°.

Il a déjà été proposé, par le brevet LU-A 56 223, d'utiliser une radiation présentant une longueur d'onde nettement supérieure à la rugosité à mesurer. La technique connue par ce document ne fait appel qu'à un seul faisceau réfléchi et sa fiabilité est largement tributaire de la qualité de la surface. Le brevet EP-A 101 375 révèle également l'emploi d'une longueur d'onde supérieure à la rugosité à mesurer, également avec un seul faisceau réfléchi.

La présente invention se propose de remédier aux inconvénients précités.

A cet effet, le procédé de mesure en continu de la rugosité de la surface d'un produit laminé à froid, qui fait l'objet de la présente invention, dans lequel on envoie sur la surface dudit produit un faisceau lumineux dont la longueur d'onde est au moins égale à la rugosité Ra maximale de ladite surface, on capte le faisceau réfléchi par ladite surface, on mesure l'énergie lumineuse réfléchie et on en déduit une mesure de la rugosité de ladite surface, est essentiellement caractérisé en ce que l'on interrompt périodiquement ledit faisceau en ce que, pendant la fraction de la période où il n'est pas interrompu, on transmet ledit faisceau lumineux directement jusqu'à la surface dudit produit sous un premier angle d'incidence $\alpha_1$, en ce que, pendant la fraction de la période où il est interrompu, on dévie ledit faisceau lumineux et on le transmet indirectement jusqu'à la surface dudit produit sous un second angle d'incidence $\alpha_2$, en ce que l'on capte les faisceaux réfléchis correspondant respectivement auxdits faisceaux incidents direct et indirect, en ce que l'on mesure l'énergie lumineuse desdits faisceaux réfléchis et en ce que l'on en déduit une mesure de la rugosité de ladite surface.

Conformément à l'invention, l'utilisation des mesures de l'énergie lumineuse réfléchie sous deux angles différents permet de réduire l'effet de fluctuations de la puissance de la source émettrice du faisceau lumineux ainsi que des variations du degré d'absorption du rayonnement lumineux par la surface du produit.

On connaît différents moyens pour déterminer l'ordre de grandeur de la rugosité des divers produits laminés à froid. On sait par exemple que les tôles destinées à la fabrication de fer-blanc ont généralement une rugosité inférieure à 0,6 micromètre, tandis que la rugosité des bandes pour emboutissage varie en général entre 1 et 3 micromètres.

L'objet de la présente invention sera mieux compris en se référant à la description qui va suivre ainsi qu'aux dessins annexés, dans lesquels la

figure 1 illustre la réflexion de la lumière lorsque la longueur d'onde est inférieure à la rugosité Ra de la surface; la

figure 2 illustre la diffraction de la lumière lorsque la longueur d'onde est supérieure à la rugosité Ra de la surface; la

figure 3 représente schématiquement un dispositif permettant la mise en œuvre particulièrement intéressante, par déviation partielle du faisceau incident; et la

figure 4 illustre la corrélation existant entre les résultats obtenus par la mesure optique suivant l'invention et les résultats obtenus par une mesure mécanique classique.

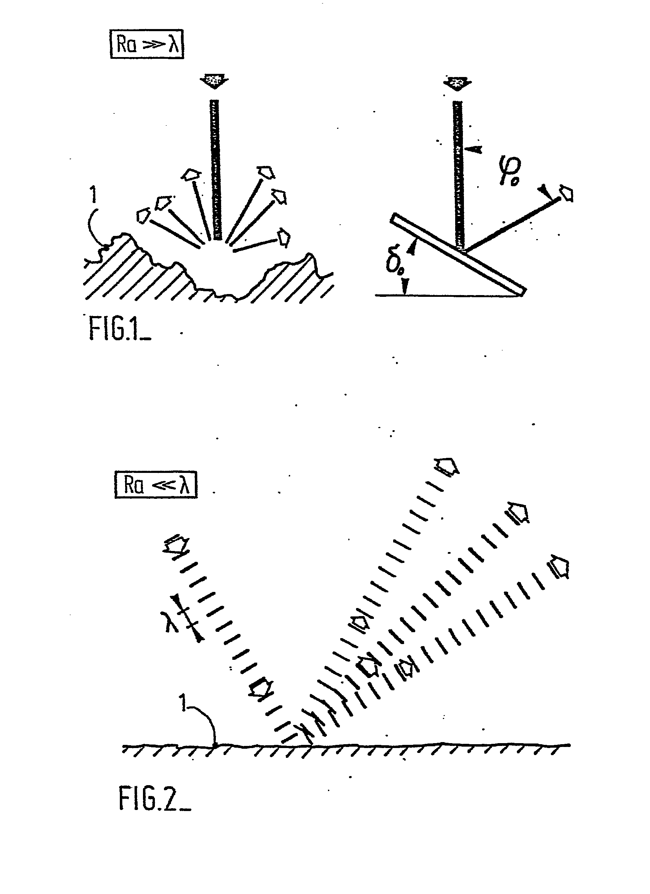

La figure 1 illustre la réflexion de la lumière par une surface lorsque la longueur d'onde $\lambda$ de cette lumière est voisine ou inférieure à la rugosité Ra de la surface. Cette surface peut être considérée comme étant constituée d'une multitude de petits miroirs de formes, dimensions et orientations aléatoires. Dans ces conditions, la mesure du rayonnement réfléchi donne des indications sur la pente du profil de rugosité, mais non sur l'amplitude de ce profil. Il n'est donc pas possible de mesurer la rugosité par ce moyen.

La figure 2 illustre la diffraction de la lumière par une surface lorsque la longueur d'onde $\lambda$ de cette lumière est supérieure à la rugosité Ra de la surface. Dans ce cas en effet, l'ensemble de la rugosité se comporte comme un réseau de diffraction aléatoire, que donne lieu à une réparation angulaire de l'intensité de lumière réfléchie. Cette réparation angulaire dépend de l'amplitude de la rugosité, et cette dépendance peut être déterminée expérimentalement par un étalonnage approprié de l'appareil utilisé pour la mesure de l'intensité de lumière réfléchie.

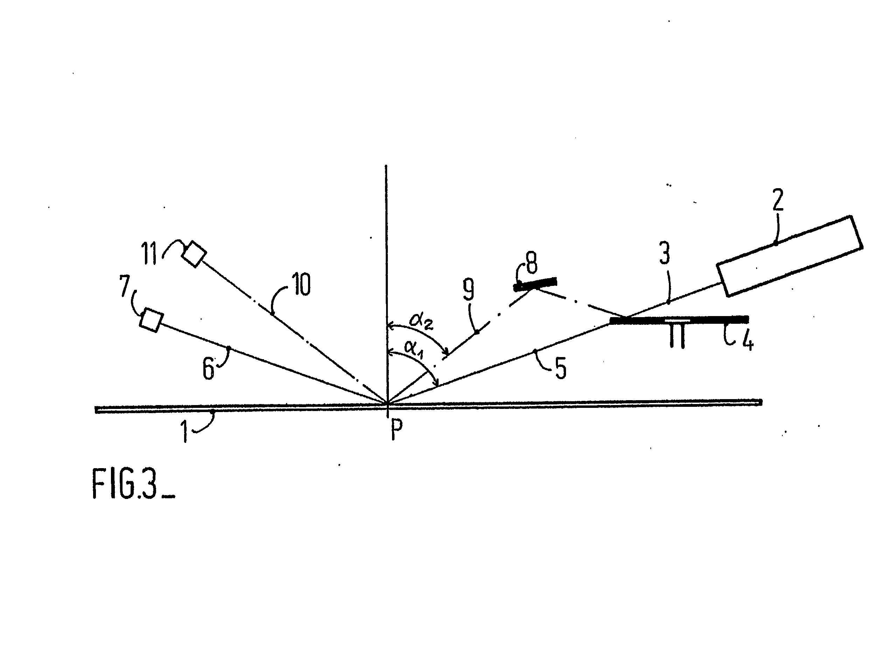

La figure 3 représente schématiquement un dispositif permettant la mise en œuvre particulièrement intéressante du procédé de l'invention.

La bande d'acier dont on désire mesurer la rugosité désignée par le repère numérique 1. Une source laser au $CO_2$ 2 envoie en direction de la bande 1 un faisceau laser 3 continu. Ce faisceau 3 est périodiquement interrompu par un disque ajouré 4 tournant à grande vitesse. Ce disque est percé d'une série de fenêtres séparées par des plages opaques, ces fenêtres et ces plages opaques se succédant en alternance suivant une couronne voisine du bord extérieur du disque. Lorsque le disque 4 tourne, le faisceau laser 1 est alternativement transmis à travers une fenêtre, et interrompu par une plage opaque. Le faisceau 5, transmis directement, frappe la surface de la bande en un point P sous un premier angle d'incidence $\alpha$, et le faisceau réfléchi correspondant, repéré 6, est capté par une première cellule pyroélectrique 7 qui mesure son intensité $I_1$. Les plages opaques du disque sont constituées par des surfaces réfléchissantes de sorte que, pendant son interruption par une de ces plages opaques, le faisceau est dévié vers un miroir 8 qui le renvoie (repère 9) vers le point P de la surface, sous un second angle d'incidence $\alpha_2$. Le faisceau réfléchi correspondant, repéré 10, est capté par une seconde cellule pyroélectrique 11, qui mesure son intensité $I_2$. Ces deux cellules pyroélectriques sont de préférence placées suivant la direction de réflexion spéculaire des faisceaux incidents respectifs; à cet effet, leur position peut être assujettie aux variations d'inclinaison de la bande 1.

La mesure de la rugosité de la surface de la bande est basée sur le principe suivant.

On sait que l'intensité lumineuse I réfléchie spéculairement sous un angle $\alpha$ par rapport à la normale à la surface est donnée par la relation:

$I = I_0 . \exp(-K . \cos^2 \alpha . Ra^2)$ (1)

dans laquelle: $I_0$ est l'intensité réfléchie par une surface parfaitement lisse, de rugosité nulle;

Ra est la rugosité de la surface;

K est une constante dépendant des unités de mesure.

L'intensité $I_0$ peut être influencée par les fluctuations de divers facteurs, tels que la puissance de la source lumineuse, le degré d'absorption du rayonnement par la surface, l'angle d'incidence ou la sensibilité de la cellule. Pour tenir compte de ces influences, on considère que la valeur $I_0$ est constituée d'une composante moyenne $I_m$ stable et d'une composante $\varepsilon$ variable, qui est généralement faible.

On a donc : $I_0 = I_m + \varepsilon$

Dans le cas présent, la relation (1), appliquée aux deux faisceaux transmis directement et indirectement, s'écrit respectivement:

$I_1 = (I_{m1} + \varepsilon_1) . \exp(- K . \cos^2 \alpha_1 . Ra^2)$ (2)

$I_2 = (I_{m2} + \varepsilon_2) . \exp(- K . \cos^2 \alpha_2 . Ra^2)$ (3)

La minimisation des fluctuations des mesures impose que

$$\left(\frac{\varepsilon_1}{I_{m1}}\right)^2 \quad + \quad \left(\frac{\varepsilon_2}{I_{m2}}\right)^2 \quad \text{soit minimum} \qquad (4)$$

Dans ces relations, $I_1$ et $I_2$ sont les intensités mesurées, tandis que $I_{m1}$ et $I_{m2}$ sont déterminées, pour un dispositif donné, par quelques essais d'étalonnage.

Ces relations (2) (3) et (4) permettent ainsi de déterminer la rugosité arithmétique moyenne Ra de la surface de la bande.

Exemple.

On a utilisé le dispositif décrit ci-dessus pour mesurer la rugosité de bandes d'acier laminées à froid. Suivant une mesure préalable par voie mécanique, avec un cut-off de 8 mm, c'est-à-dire en éliminant les variations du profil de la surface qui présentent une longueur d'onde supérieure à 8 mm, ces bandes présentaient une rugosité comprise entre 0,8 et 4 micromètres. On a testé 30 échantillons dans les conditions suivantes :
- puissance du laser $CO_2$ : 6 W,
- distance laser - point d'impact : 570 mm,
- distance point d'impact-cellules : 570 mm,
- angle d'incidence $\alpha_1 = 65°$,
- angle d'incidence $\alpha_2 = 50°$,
- vitesse linéaire de défilement de la bande : 65 m/min.

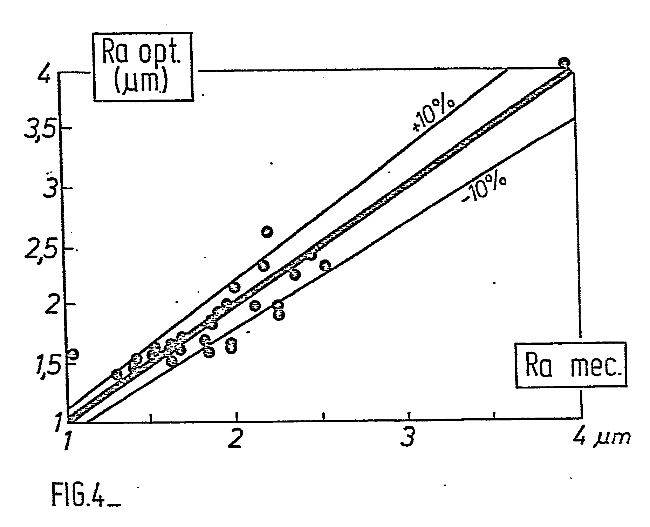

La figure 4 rassemble les résultats obtenus et elle illustre la corrélation entre le résultat des mesures optiques suivant l'invention (Ra opt), en ordonnées, et le résultat des mesures mécaniques classiques (Ra mec), en abscisses, celles-ci étant effectuées avec un cut-off de 8 mm, comme indiqué plus haut. On voit que cette corrélation est excellente, l'écart maximum étant de ± 10 %, ce qui est largement satisfaisant, compte tenu de l'imprécision affectant par ailleurs la mesure mécanique elle-même.

Il va de soi que l'invention n'est pas limitée strictement aux modes de réalisation qui ont été décrits et illustrés ci-dessus.

En particulier, il ne sortirait pas du cadre de l'invention d'utiliser deux faisceaux lumineux séparés au lieu d'un seul faisceau fractionné comme indiqué plus haut. Une telle solution ne serait pas nécessairement avantageuse, car elle nécessiterait l'utilisation d'un double appareillage et pourrait notamment poser de sérieux problèmes d'interférences.

Par ailleurs, on pourrait prévoir de placer un dispositif approprié pour réduire la divergence du faisceau lumineux, en particulier du faisceau laser, lorsque la distance entre l'émetteur et la surface est longue.

Enfin, l'invention n'est pas davantage liée à une orientation particulière du plan vertical formé par les faisceaux incident et réfléchi, par rapport à la direction de déplacement de la surface.

De même, et toujours selon l'invention, on peut mesurer la rugosité en continu simultanément en plusieurs points répartis sur la largeur du produit, au moyen de plusieurs ensembles de mesure correspondant à ces différents points de visée. Cette façon de procéder permet de déterminer la distribution de la rugosité sur la largeur de produit laminé, par example d'une bande laminée à froid.

Le procédé de l'invention permet de surveiller l'évolution longitudinale de la rugosité d'une bande laminée à froid et de détecter immédiatement le moment où il est nécessaire de procéder à un changement de cylindre. Grâce à ce procédé, on peut éviter les arrêts prolongés du laminoir, ainsi que les pertes de production .

**Revendications**

1. Procédé de mesure en continu de la rugosité de la surface d'un produit laminé à froid, dans lequel on envoie sur la surface dudit produit un faisceau lumineux dont la longueur d'onde est au moins égale à la rugosité Ra maximale de ladite surface, on capte le faisceau réfléchi par ladite surface, on mesure l'énergie lumineuse réfléchie et on en déduit une mesure de la rugosité de ladite surface, caractérisé en ce que l'on interrompt périodiquement le faisceau lumineux incident, en ce que, pendant la fraction de la période où il n'est par interrompu, on transmet ledit faisceau lumineux incident directement jusqu'à la surface dudit produit sous un premier angle d'incidence $\alpha_1$, en ce que, pendant la fraction de la période où il est interrompu, on dévie ledit faisceau et on le transmet indirectement jusqu'au même point de la surface du produit sous un second angle d'incidence $\alpha_2$, en ce que l'on capte les faisceaux réfléchis correspondant respectivement auxdits faisceaux incidents direct et indirect, en ce que l'on mesure l'énergie lumineuse desdits faisceaux réfléchis et en ce que l'on en déduit une mesure de la rugosité de ladite surface.

2. Procédé suivant la revendication 1, caractérisé en ce que, dans le cas d'une bande laminée à froid pour emboutissage, on utilise un faisceau lumineux dont la longueur d'onde est au moins égale à 5 micromètres.

3. Procédé suivant l'une ou l'autre des revendications 1 et 2, caractérisé en ce que l'on utilise un faisceau émis par un laser, de préférence un laser au $CO_2$.

4. Procédé suivant la revendication 3, caractérisé en ce que l'on utilise un faisceau laser d'une puissance inférieure à 25 W.

5. Procédé suivant l'une ou l'autre des revendications 1 à 4, caractérisé en ce que le faisceau incident est incliné d'environ 50° par rapport à la normale à la surface.

6. Procédé suivant l'une ou l'autre des revendications 1 à 5, caractérisé en ce que l'on capte le faisceau réfléchi selon la direction spéculaire.

7. Procédé suivant l'une ou l'autre des revendications 1 à 6, caractérisé en ce que l'on mesure la rugosité en plusieurs points répartis sur la largeur du produit laminé.

8. Procédé suivant l'une ou l'autre des revendications 1 à 7, caractérisé en ce que l'on dispose l'ensemble de mesure de la rugosité immédiatement à la sortie du laminoir, de telle façon que les faisceaux incident et réfléchis définissent un plan vertical perpendiculaire à la direction de déplacement du produit laminé à froid.

## Claims

1. Process for the continuous measurement of the roughness of the surface of a cold-rolled product, in which a beam of light is directed onto the surface of the said product, the wavelength of which beam of light is at least equal to the maximum roughness Ra of the said surface, the beam reflected by the said surface is collected, the reflected luminous energy is measured and a measurement of the roughness of the said surface is deduced therefrom, characterized in that the incident beam of light is interrupted periodically, in that, during the fraction of time when it is not interrupted, the said incident beam of light is transmitted directly to the surface of the said product at a first angle of incidence $\alpha_1$, in that, during the fraction of time when it is interrupted, the said beam is deflected and it is transmitted indirectly to the same point of the surface of the product at a second angle of incidence $\alpha_2$, in that the reflected beams corresponding respectively to the said direct and indirect incident beams are collected, in that the luminous energy of the said reflected beams is measured and in that a measurement of the roughness of the said surface is deduced therefrom.

2. Process according to Claim 1, characterized in that, in the case of a cold-rolled strip for stamping, a beam of light with a wavelength at least equal to 5 micrometres is used.

3. Process according to either of Claims 1 and 2, characterized in that a beam emitted by a laser, preferably a $CO_2$ laser, is used.

4. Process according to Claim 3, characterized in that a laser beam with a power of less than 25 W is used.

5. Process according to Claim 1 to 4, characterized in that the incident beam is inclined at approximately 50° with respect to the normal to the surface.

6. Process according to any of Claims 1 to 5, characterized in that the beam reflected in the specular direction is collected.

7. Process according to any of Claims 1 to 6, characterized in that the roughness at a plurality of points distributed over the width of the rolled product is measured.

8. Process according to any of Claims 1 to 7, characterized in that the assembly for measuring the roughness is arranged immediately downstream of the rolling mill, in such a way that the incident and reflected beams define a vertical plane perpendicular to the direction of displacement of the cold-rolled product.

## Patentansprüche

1. Kontinuierliches Meßverfahren für die Oberflächenrauhigkeit eines kaltgewalzten Produktes, bei dem man eine Lichtstrahl auf die Oberfläche jenes Produktes sendet, dessen Wellenlänge mindestens gleich der maximalen Rauhigkeit Ra jener Oberfläche ist, man den von jener Oberfläche reflektierten Strahl einfängt, die reflektierte Lichtenergie mißt und daraus ein Maß der Rauhigkeit jener Oberfläche ableitet, dadurch gekennzeichnet, daß man den einfallenden Lichtstrahl periodisch unterbricht, daß man während des Bruchteils der Periode, in dem er nicht unterbrochen ist, jenen einfallenden Lichtstrahl unter einem ersten Einfallwinkel $\alpha_1$ direkt bis zur Oberfläche jenes Produktes überträgt, daß man während des Bruchteils der Periode, in dem er unterbrochen ist, jenen Strahl ablenkt und ihn unter einem zweiten Einfallwinkel $\alpha_2$ indirekt bis zu derselben Stelle der Produktoberfläche überträgt, daß man die jeweils den direkt und indirekt einfallenden Strahlen entsprechenden reflektierten Strahlen einfängt, daß man die Lichtenergie jener reflektierten Strahlen mißt und daß man daraus ein Maß der Rauhigkeit jener Oberfläche ableitet.

2. Verfahren nach Anspruch 1, dadurch gekennzeichnet, daß man im Falle eines zum Tiefziehen kaltgewalzten Bandes einen Lichtstrahl verwendet, dessen Wellenlänge mindestens gleich 5 Mikrometer ist.

3. Verfahren nach Anspruch 1 oder 2, dadurch gekennzeichnet, daß man einen von einem Laser, vorzugsweise einem $CO_2$-Laser, emittierten Strahl verwendet.

4. Verfahren nach Anspruch 3, dadurch gekennzeichnet, daß man einen Laserstrahl mit weniger als 25 W Leistung verwendet.

5. Verfahren nach einem der Ansprüche 1 bis 4, dadurch gekennzeichnet, daß der einfallende Strahl zur Oberfläche um etwa 50° bezüglich der Senkrechten geneigt ist.

6. Verfahren nach einem der Ansprüche 1 bis 5, dadurch gekennzeichnet, daß man den in Spiegelrichtung reflektierten Strahl einfängt.

7. Verfahren nach einem der Ansprüche 1 bis 6, dadurch gekennzeichnet, daß man die Rauhigkeit an mehreren über die Breite des gewalzten Produktes verteilten Stellen mißt.

8. Verfahren nach einem der Ansprüche 1 bis 7, dadurch gekennzeichnet, daß man die Rauhigkeitsmeßgruppe unmittelbar am Ausgang der Walzanlage so anordnet, daß die einfallenden und reflektierten Strahlen eine senkrecht zur Verschiebungsrichtung des kaltgewalzten Produktes stehende Vertikalebene festlegen.

$$Ra \gg \lambda$$

FIG.1_

$$Ra \ll \lambda$$

FIG.2_

FIG.3

EP 0 229 603 B1

FIG.4_